# EUROPÄISCHE PATENTSCHRIFT

(11) **EP 4 139 169 B1**
(45) Veröffentlichungstag und Bekanntmachung des Hinweises auf die Patenterteilung: **02.12.2026**
(21) Anmeldenummer: 21724544.8
(22) Anmeldetag: 16.02.2021
(51) Int. Cl.: E05F 15/611, B60Q 1/52, B60Q 1/32, E05B 17/10

(54) **KRAFTFAHRZEUGKLAPPE, INSBESONDERE KRAFTFAHRZEUG-TÜR**
MOTOR VEHICLE DOOR
OUVRANT POUR VÉHICULE AUTOMOBILE EN PARTICULIER PORTE DE VÉHICULE

(30) Priorität: 21.04.2020 DE 102020110797; 21.04.2020 DE 102020110812
(43) Veröffentlichungstag der Anmeldung: 01.03.2023
(73) Patentinhaber: Kiekert Aktiengesellschaft, 42579 Heiligenhaus (DE)
(72) Erfinder: BENDEL, Thorsten, 46149 Oberhausen (DE)
(74) Vertreter: Kiekert AG Patentabteilung
(86) Internationale Anmeldenummer: PCT/DE2021/100150
(87) Internationale Veröffentlichungsnummer: WO 2021/213565

(56) Entgegenhaltungen:
- EP-A2- 1 039 077
- DE-A1- 102018 124 331
- FR-A1- 2 860 823
- JP-A- 2006 062 545
- JP-U- H0 678 080
- US-A1- 2012 192 602
- US-A1- 2018 072 225

## Beschreibung

Die Erfindung betrifft eine Kraftfahrzeug-Klappe, insbesondere Kraftfahrzeug-Tür, mit einer Leuchteinheit, und mit einer im Klappenflügel angeordneten Energie-Speichereinheit zur Energieversorgung zumindest der Leuchteinheit wobei die Energie-Speichereinheit über wenigstens eine lösbare elektrische Verbindung mit der Leuchteinheit gekoppelt ist.

Leuchteinheiten in Kraftfahrzeug-Klappen und insbesondere Kraftfahrzeug-Türen werden insbesondere eingesetzt, um die Sicherheit zu erhöhen. Denn mit Hilfe der Leuchteinheit kann beispielsweise ein Fußgänger oder Fahrradfahrer bei einer sich öffnenden Kraftfahrzeug-Klappe auf den Vorgang optisch hingewiesen werden. Dadurch wird die Sicherheit erhöht und lassen sich insbesondere Kollisionen vermeiden. Als Kraftfahrzeug-Klappe gilt dabei jede gegenüber einer Karosserie bewegbare und eine Öffnung in oder an der Karosserie verschließende Einrichtung.

Beispielsweise handelt es sich bei der Kraftfahrzeug-Klappe um eine Kraftfahrzeug-Heckklappe, eine Kraftfahrzeug-Fronthaube, eine Kraftfahrzeug-Ladeklappe, eine Kraftfahrzeug-Tankklappe usw. Insbesondere geht es erfindungsgemäß um Kraftfahrzeug-Türen und hier meistens Kraftfahrzeug-Seitentüren.

Im Stand der Technik nach der DE 10 2016 105 987 A1 wird eine Schließvorrichtung für ein Kraftfahrzeug beschrieben, die über ein Leuchtmittel und zusätzlich ein Lichtleitelement verfügt. Auf diese Weise kann Licht in ein Umfeld der Schließeinrichtung geleitet und emittiert werden. Außerdem weist das Lichtleitelement ein Bildgebungsmittel auf. Dadurch lässt sich insgesamt eine variierbare Anzeige erzeugen. Die Anzeige ist darüber hinaus projizierbar, sodass mindestens ein Schriftzeichen und/oder ein Symbol und/oder auch ein Muster angezeigt werden können.

Auf diese Weise lassen sich über die Darstellung von Schriftzeichen bzw. Symbolen Anzeigezustände wiedergeben. Dadurch wird beispielsweise der Benutzer eines Kraftfahrzeuges eindeutig auf einen mangelhaften Verschlusszustand des Kraftfahrzeuges hingewiesen. Auch lassen sich hierdurch Warnhinweise projizieren. Das hat sich grundsätzlich bewährt. Allerdings erfolgt die Energieversorgung der Leuchteinheit typischerweise konventionell über eine integrierte Batterie, welche in ein Schließvorrichtungsgehäuse fest eingebaut ist.

Neben solchen Leuchteinheiten an oder in Kraftfahrzeug-Klappen gibt es darüber hinaus Zusatzeinrichtungen, die zumindest im Notfall durch eine im Klappenflügel angeordnete Energie-Speichereinheit mit der erforderlichen Energie versorgt werden können. Bei diesen Zusatzeinrichtungen handelt es sich im Rahmen der DE 10 2018 129 403 A1 beispielhaft um ein angetriebenes Türpräsentator-System. Mit deren Hilfe bzw. einem zugehörigen Präsentator-Stellglied lässt sich der Klappenflügel zumindest soweit gegenüber der Fahrzeugkarosserie aufstellen, dass im Anschluss hieran die fragliche Kraftfahrzeug-Klappe problemlos manuell geöffnet und verschwenkt werden kann. Das gelingt auch für den Fall, dass gänzlich auf einen Außentürgriff verzichtet wird.

Ganz abgesehen davon beschreibt die DE 10 2018 117 477 A1 ein Verschlusspaneel-System für ein Kraftfahrzeug. Dieses verfügt neben einer Präsentator-Anordnung zusätzlich über eine Beleuchtungsanordnung bzw. eine Leuchteinheit, die in der Nähe eines Greifbereiches montiert ist und betrieben werden kann. Die Energieversorgung erfolgt offensichtlich konventionell unter Rückgriff auf eine ohnehin im Kraftfahrzeug vorhandene Energiequelle.

Der Stand der Technik hat sich grundsätzlich bewährt, was den Betrieb der Leuchteinheit oder auch die Schließvorrichtung bzw. eine Türpräsentator-Einrichtung angeht. Sämtliche vorgenannten Einrichtungen und ihre einwandfreie Funktionsweise sind jedoch davon abhängig, dass eine unterbrechungsfreie elektrische Energieversorgung vorliegt. Zwar beschreibt die DE 10 2018 129403 A1 die grundsätzliche Möglichkeit, das dortige angetriebene Präsentator-System mit Hilfe einer Sicherungs-Energiequelle im Notfall mit elektrischer Energie zu versorgen. Das gilt insbesondere dann, wenn eine Verbindung zur Hauptversorgungsquelle, in der Regel der Kraftfahrzeugbatterie, unterbrochen ist oder aus anderen Gründen versagt.

Hierbei handelt es sich jedoch um eine Lösung, die auf eine im Innern der Kraftfahrzeug-Klappe fest eingebaute Energie-Speichereinheit zur Energieversorgung insbesondere im Notfall zurückgreift. Das hat den Nachteil, dass die fragliche Energie-Speichereinheit beispielsweise nach einer bestimmten Betriebsdauer nicht einfach ausgewechselt werden kann. Außerdem besteht nicht die Möglichkeit, auch andere in oder an der Kraftfahrzeug-Klappe vorgesehene Stell- oder auch Schließelemente mit der zur Verfügung gestellten Energie-Speichereinheit koppeln zu können.

Den nächstkommenden und gattungsbildenden Stand der Technik liefert die US 2012/0192602 A1. Hieraus ist eine Schließeinheit für eine Kraftfahrzeug-Tür bekannt, die mit einer schwenkbaren Handhabe ausgerüstet ist. Außerdem ist ein Schließzylinder ebenso wie eine elektronische Berührfläche vorgesehen. Die elektronische Berührfläche verfügt über einzelne LEDs. Außerdem sind zugehörige entfernbare Akkumulatoren realisiert.

Der Erfindung liegt das technische Problem zugrunde, eine derartige Kraftfahrzeug-Klappe und insbesondere Kraftfahrzeug-Tür so weiterzuentwickeln, dass die Energie-Speichereinheit ausgewechselt werden kann und auch zur Versorgung weiterer Elemente dient.

Zur Lösung dieser technischen Problemstellung ist eine gattungsgemäße Kraftfahrzeug-Klappe und insbesondere Kraftfahrzeug-Tür im Rahmen der Erfindung dadurch gekennzeichnet, dass zusätzlich zu der Leuchteinheit ein elektrisch betätigbares Ausstellelement für den Klappenflügel vorgesehen ist, wobei das Ausstellelement ebenfalls lösbar mit der Energie-Speichereinheit elektrisch verbunden ist, wobei ferner die Leuchteinheit, die Energie-Speichereinheit und das Ausstellelement für den Türflügel in einem Kraftfahrzeug-Schlossgehäuse aufgenommen werden, wobei weiter das Kraftfahrzeug-Schlossgehäuse in seinem Innern neben der Leuchteinheit, der Energie-Speichereinheit und dem Ausstellelement zusätzlich übliche Schlosselemente wie ein Gesperre aus Drehfalle und Sperrklinke sowie eine Betätigungs-/Verriegelungshebelkette aufnimmt, und wobei die Energie-Speichereinheit eine zentrale Funktion zur Energieversorgung und insbesondere zur Notenergieversorgung übernimmt, nämlich in dem Fall, dass das dargestellte Kraftfahrzeug-Schlossgehäuse nicht mehr elektrisch mit der Kraftfahrzeugkarosserie verbunden ist, weil bedingt durch einen Unfall die elektrische Verbindung unterbrochen oder beschädigt ist.

Im Rahmen der Erfindung ist also zunächst einmal die Energie-Speichereinheit im Innern des Klappenflügels austauschbar ausgelegt. Hierfür sorgt die lösbare elektrische Verbindung. Darüber hinaus können neben der lösbaren elektrischen Verbindung mit der Leuchteinheit weitere elektrische Verbindungen ausgehend von der Energie-Speichereinheit realisiert werden. Tatsächlich ist erfindungsgemäß zusätzlich zu der Leuchteinheit das elektrisch betätigbare Ausstellelement für den Klappenflügel vorgesehen. Zusätzlich kann ein Stell- und/oder Schließelement auch für einen gegenüber dem Klappenflügel bewegbaren weiteren Klappenbestandteil realisiert werden.

Dabei ist das fragliche Ausstellelement ebenfalls lösbar mit der Energie-Speichereinheit verbunden. Außerdem ist das Ausstellelement wie die Energie-Speichereinheit - im Innern des Klappenflügels angeordnet, sodass die elektrische Verbindung problemlos und geschützt realisiert werden kann.

Erfindungsgemäß übernimmt also die im Klappenflügel angeordnete Energie-Speichereinheit eine gleichsam zentrale Funktion zur Energieversorgung. Denn die fragliche Energie-Speichereinheit verfügt über zumindest eine, in der Regel mehrere elektrisch lösbare Verbindungen. Zunächst einmal ist die obligatorische Leuchteinheit lösbar mit der Energie-Speichereinheit gekoppelt. Darüber hinaus bezieht auch das elektrisch betätigbare Ausstellelement seine elektrische Energie über die weitere lösbare elektrische Verbindung von der Energie-Speichereinheit, insbesondere im Notfall.

Jedenfalls wird deutlich, dass die erfindungsgemäß austauschbar ausgebildete Energie-Speichereinheit über eine oder mehrere lösbare elektrische Verbindungen nicht nur mit der Leuchteinheit gekoppelt werden kann, sondern zusätzlich zur Energieversorgung weiterer Stell- und/oder Schließelemente bereitsteht. Das gilt insbesondere für einen Notbetrieb. Tatsächlich kann folglich mit Hilfe der Energie-Speichereinheit ein elektrisch betätigbares Kraftfahrzeug-Türschloss als Schließelement mit der erforderlichen elektrischen Energie versorgt werden, um zumindest eine Türöffnung zu realisieren und umzusetzen.

Erfindungsgemäß kann die Energie-Speichereinheit aber auch zur Notversorgung eines Türaufstellers als Stellelement genutzt werden. Das ist besonders dann vorteilhaft, wenn die fragliche Kraftfahrzeug-Klappe bzw. Kraftfahrzeug-Tür keinen Außentürgriff aufweist und im Notbetrieb mit Hilfe des Türaufstellers der zugehörige Klappenflügel bzw. Türflügel zumindest soweit ausgestellt werden muss, dass ein Spalt zum Öffnen der Kraftfahrzeug-Klappe bzw. Kraftfahrzeug-Tür auf manuellem Wege freigegeben wird. Generell kann dies auch mit Hilfe eines Antriebes als Stellelement für die Kraftfahrzeug-Klappe realisiert und umgesetzt werden.

Nach vorteilhafter Ausgestaltung sind die Energie-Speichereinheit und/oder die Leuchteinheit jeweils einzeln oder zusammengenommen modular aufgebaut. D. h., die Energie-Speichereinheit und/oder die Leuchteinheit stellen jeweils eine eigenständige und geschlossene Funktionseinheit dar. In der Regel definieren die Energie-Speichereinheit und ggf. die Leuchteinheit zusammengenommen ein Modul. Dieses ist darüber hinaus und vorteilhaft zum nachträglichen Einbau in ein Gehäuse ausgelegt.

Ganz generell sind sowohl die Energie-Speichereinheit als auch die Leuchteinheit zum nachträglichen Einbau in ein solches Gehäuse ausgebildet. Bei dem Gehäuse handelt es sich um ein Kraftfahrzeug-Schlossgehäuse.

Besonders vorteilhaft ist es, wenn die Energie-Speichereinheit und ggf. die Leuchteinheit zusammengenommen ein Modul zum nachträglichen Einbau in das Gehäuse definieren. Bei dem Gehäuse handelt es sich

Kraftfahrzeug-Schlossgehäuse. D. h., das Kraftfahrzeug-Schlossgehäuse wird im Rahmen der Erfindung zusätzlich mit dem austauschbaren Modul aus der Energie-Speichereinheit und ggf. der Leuchteinheit vorteilhaft ausgerüstet. Dadurch kann die Energie-Speichereinheit im Bedarfsfall nachgerüstet bzw. ausgetauscht werden. Darüber hinaus kann die Energie-Speichereinheit im Beispielfall nicht nur für die Notbetätigung bzw. das Notöffnen des zugehörigen Kraftfahrzeug-Schlosses genutzt werden. Sondern mit Hilfe der Energie-Speichereinheit ist auch eine Beaufschlagung des Türaufstellers und/oder eines Öffnungsantriebes möglich. Dadurch übernimmt die Energie-Speichereinheit die bereits beschriebene zentrale Energieversorgung im Notbetrieb.

Die Leuchteinheit weist wenigstens eine LED auf. Meistens sind drei oder mehr LEDs vorgesehen. Die LEDs können darüber hinaus unterschiedlich farbig gestaltet sein. Dadurch besteht die Möglichkeit, mit Hilfe der Leuchteinheit unterschiedliche Richtungen bzw. Einsatzzwecke zu realisieren. Beispielsweise mag eine nach hinten, d. h. in Richtung auf das Fahrzeugheck, gerichtete LED rot zur Warnung leuchten. Denn mit ihrer Hilfe wird beispielsweise ein nachfolgender Fußgänger oder Fahrradfahrer auf die geöffnete Tür hingewiesen.

Eine weitere LED kann beispielsweise weiß leuchtend ausgebildet sein und nach unten leuchten, um einen Schwenkbereich der fraglichen Kraftfahrzeug-Tür im Beispielfall auszuleuchten. Darüber hinaus besteht dann noch mit Hilfe der dritten LED die Möglichkeit, eine Beleuchtung des Innenraumes vorzunehmen. Jedenfalls lässt sich hierdurch das Kraftfahrzeug-Schloss im Beispielfall mit zusätzlichen Funktionen ausrüsten.

Die Energie-Speichereinheit als solche beinhaltet in der Regel zumindest eine Batterie. Alternativ oder zusätzlich kann die Energie-Speichereinheit aber auch mit einem oder mehreren Kondensatoren ausgerüstet werden. Bei dem einen oder den mehreren Kondensatoren handelt es sich vorteilhaft um sogenannte Supercaps, also Kondensatoren mit besonders hoher Kapazität. Die elektrische Energieversorgung der Energie-Speichereinheit erfolgt dabei problemlos während des Betriebes über die Kraftfahrzeug-Batterie respektive die Lichtmaschine, weil dass das Modul aufnehmende Kraftfahrzeug-Schlossgehäuse bzw. die im Innern an dieser Stelle vorgesehenen Einrichtungen ohnehin elektrisch mit dem Bordnetz des Kraftfahrzeuges verbunden sind.

Im Ergebnis wird eine Kraftfahrzeug-Klappe und insbesondere Kraftfahrzeug-Tür zur Verfügung gestellt, die zunächst einmal mit einer zusätzlichen Leuchteinheit ausgerüstet ist, um Warnfunktionen oder auch Komfortfunktionen wie beschrieben übernehmen zu können. Zusätzlich ist eine Energie-Speichereinheit realisiert, mit deren Hilfe nicht nur die Leuchteinheit mit der erforderlichen elektrischen Energie versorgt werden kann, sondern zusätzlich auch weitere elektrisch betätigbare Stell- und/oder Schließelemente. Das ist insbesondere für einen Notbetrieb relevant, weil hierbei die fragliche Energie-Speichereinheit insgesamt die Funktion einer zentralen Notenergiequelle übernimmt.

Das alles gelingt besonders einfach und mit geringstem konstruktiven Aufwand dadurch, dass ggf. die Leuchteinheit und die Energie-Speichereinheit zusam mengenommen ein Modul zum nachträglichen Einbau Kraftfahrzeug-Schlossgehäuse darstellen. Da darüber hinaus die Energie-Speichereinheit über wenigstens eine lösbare elektrische Verbindung mit der Leuchteinheit respektive dem einen oder den mehreren Ausstellelementen ausgerüstet ist, kann die Energie-Speichereinheit im Bedarfsfall problemlos ausgetauscht werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Kraftfahrzeug-Klappe in Gestalt einer Kraftfahrzeug-Tür und insbesondere Kraftfahrzeug-Seitentür schematisch in einer Übersicht und
- Fig. 2: die Kraftfahrzeug-Seitentür in einer Detailansicht.

In den Figuren ist eine Kraftfahrzeug-Klappe dargestellt, bei der es sich nach dem Ausführungsbeispiel um eine Kraftfahrzeug-Tür und konkret entsprechend der

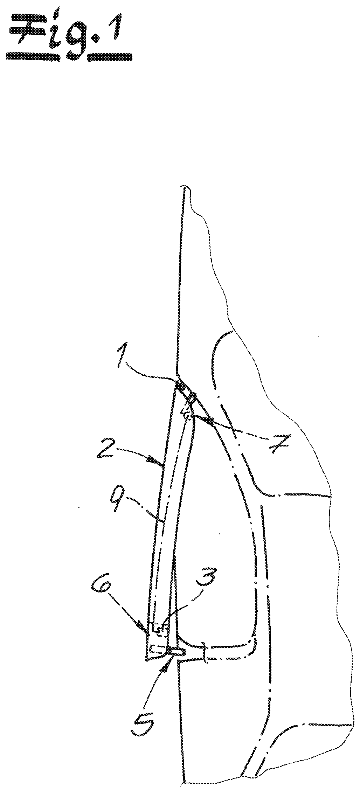

Darstellung nach der Fig. 1 um eine vordere Kraftfahrzeug-Seitentür handelt, die mit einem um eine Achse 1 schwenkbaren Klappenflügel bzw. Türflügel 2 ausgerüstet ist.

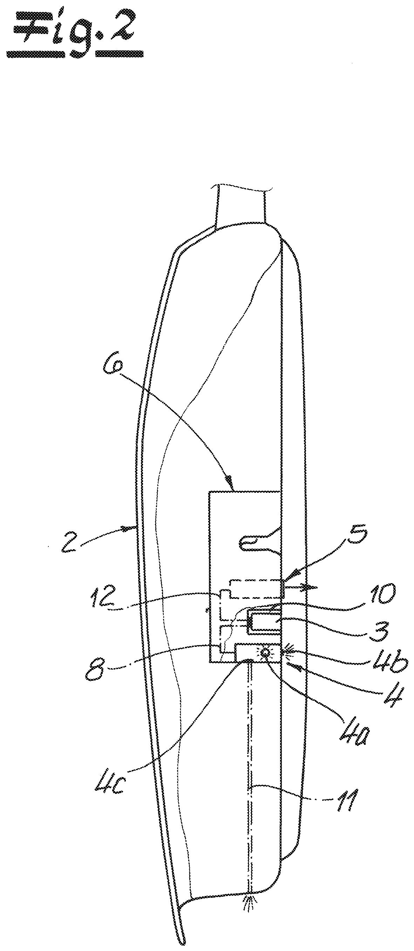

Die Kraftfahrzeug-Seitentür bzw. der Türflügel 2 ist mit einer in seinem Innern angeordneten Energie-Speichereinheit 3 ausgerüstet. Außerdem ist eine Leuchteinheit 4 mit nach dem Ausführungsbeispiel drei unterschiedlich farbigen LEDs 4a, 4b, 4c vorgesehen. In der Fig. 2 erkennt man darüber hinaus noch ein Ausstellelement 5.

Die Leuchteinheit 4, die Energie-Speichereinheit 3 und das Ausstellelement 5 bzw. allgemein das elektrisch betätigbare Stellelement 5 für den Türflügel 2 werden insgesamt in einem Gehäuse 6 aufgenommen. Das Stellelement 5 kann selbstverständlich auch separat vom Gehäuse 6 ausgelegt werden, was jedoch einer nicht erfindungsgemäßen Ausführungsform entspricht. Bei dem Gehäuse 6 handelt es sich um ein Kraftfahrzeug-Schlossgehäuse 6, also ein Gehäuse 6, welches in seinem Innern neben der Leuchteinheit 4, der Energie-Speichereinheit 3 und dem Ausstellelement 5 zusätzlich übliche Schlosselemente wie ein Gesperre aus Drehfalle und Sperrklinke sowie eine Betätigungs-/Verriegelungshebelkette aufnimmt. Das ist im Detail jedoch nicht dargestellt.

Neben dem Ausstellelement 5 als Stell- und/oder Schließelement 5 ist dann noch ein Antrieb 7 für den Türflügel 2 vorgesehen. Der Antrieb 7 stellt erneut ein Stellelement 7 dar. Bei dem Kraftfahrzeug-Schlossgehäuse 6 bzw. dem zugehörigen Kraftfahrzeug-Schloss handelt es sich um ein Schließelement 6. Der Antrieb 7 befindet sich im Bereich eines die Achse 1 definierenden Türscharniers und sorgt insgesamt dafür, dass der Türflügel 2 geöffnet und geschlossen werden kann.

Anhand einer vergleichenden Betrachtung der Fig. 1 und 2 wird deutlich, dass erfindungsgemäß die Energie-Speichereinheit 3 über wenigstens eine lösbare elektrische Verbindung 8, 9, 12 mit der Leuchteinheit 4 gekoppelt ist. Tatsächlich erkennt man insbesondere anhand der Darstellung in der Fig. 2, dass an die Energie-Speichereinheit 3 nach dem Ausführungsbeispiel drei elektrische Verbindungen 8, 9, 12 lösbar angeschlossen sind. Die eine elektrische Verbindung 8 dient zur Kopplung der Energie-Speichereinheit 3 mit der Leuchteinheit 4. Mit Hilfe der anderen elektrischen Verbindung 9 wird demgegenüber eine lösbare elektrische Verbindung von der Energie-Speichereinheit 3 zum Antrieb 7 für den Türflügel 2 zur Verfügung gestellt. Die weitere dritte elektrische Verbindung 12 koppelt die Energie-Speichereinheit 3 lösbar mit dem Ausstellelement 5.

Auf diese Weise übernimmt die Energie-Speichereinheit 3 eine zentrale Funktion zur Energieversorgung und insbesondere zur Notenergieversorgung, nämlich in dem Fall, dass das dargestellte Kraftfahrzeug-Schlossgehäuse 6 nicht (mehr) elektrisch mit der Kraftfahrzeugkarosserie verbunden ist, weil bedingt durch einen Unfall die elektrische Verbindung unterbrochen oder beschädigt ist. Ebenso kommt ein solcher Notbetrieb infrage, wenn die kraftfahrzeugseitige Batterie schlicht und ergreifend entladen ist und ansonsten der Türflügel 2 nicht geöffnet werden kann.

Die Energie-Speichereinheit 3 weist in der Regel zumindest eine Batterie und/oder einen Kondensator auf, wie dies einleitend bereits beschrieben worden ist. Außerdem ist die Auslegung meistens so getroffen, dass die Energie-Speichereinheit 3 und auch die Leuchteinheit 4 jeweils einzeln oder zusammengenommen modular aufgebaut sind. Meistens ist die Auslegung so getroffen, dass die Energie-Speichereinheit 3 und gegebenenfalls die Leuchteinheit 4 zusammengenommen ein Modul zum nachträglichen Einbau in das Gehäuse 6 definieren. Nach dem Ausführungsbeispiel ist lediglich die Energie-Speichereinheit 3 als Modul zum nachträglichen Einbau in das fragliche Gehäuse 6 ausgelegt. D. h., die Energie-Speichereinheit 3 definiert ein geschlossenes Funktionsmodul mit eigenem Gehäuse zum nachträglichen Einbau in das Gehäuse 6.

Dazu verfügt das Gehäuse 6 bzw. Kraftfahrzeug-Schlossgehäuse 6 nach dem Ausführungsbeispiel über eine Aufnahme 10 im Gehäuse 6, in welche die Energie-Speichereinheit 3 lösbar eingesteckt wird. Sobald die Energie-Speichereinheit 3 in das Gehäuse 6 eingesteckt ist, sorgen miteinander wechselwirkende Kontakte hierdurch zugleich dafür, dass die Leuchteinheit 4 mit Hilfe der Energie-Speichereinheit 3 mit der erforderlichen Energie versorgt wird, weil dann die elektrische Verbindung 8 geschlossen ist. Zugleich stellt die Energie-Speichereinheit 3 eine Notenergiequelle für einen nicht ausdrücklich dargestellten und im Inneren des Gehäuses bzw. Schlossgehäuses 6 vorgesehenen elektromotorischen Antrieb dar, mit dessen Hilfe typischerweise das Gesperre elektromotorisch geöffnet wird. Bei einem Ausfall der in der Kraftfahrzeugkarosserie vorgesehenen Hauptenergiequelle sorgt also die Energie-Speichereinheit 3 dafür, dass das Kraftfahrzeug-Schloss nach wie vor und unverändert elektromotorisch geöffnet werden kann.

Zugleich ist die Energie-Speichereinheit 3 bzw. das an dieser Stelle realisierte Modul zum nachträglichen Einbau in das Gehäuse 6 mit elektrischen Kontaktelementen ausgerüstet, damit über die weitere lösbare elektrische Verbindung 9 der Antrieb 7 für den Türflügel 2 im Sinne einer Notöffnung ebenfalls mit Hilfe der Energie-Speichereinheit 3 beaufschlagt werden kann.

Wie bereits erläutert, ist die Leuchteinheit 4 im Innern des Kraftfahrzeug-Schlossgehäuses 6 angeordnet. Dazu mag die Leuchteinheit 4 auf einer dort ohnehin vorgesehenen Platine bzw. einem Elektrokomponententräger angebracht sein. Die LED 4a sorgt in diesem Fall dafür, dass ihr abgegebenes rotes Licht im Beispielfall nach hinten, d. h. entgegen der Fahrtrichtung in einen rückwärtigen Bereich ausgehend vom Türflügel 2 abgestrahlt wird. Dadurch übernimmt die fragliche LED 4a eine Warnfunktion. Die weitere LED 4b ist demgegenüber als Weißlicht-LED ausgebildet und mag das von ihr abgegebene Licht in Richtung auf einen Innenraum des zugehörigen Kraftfahrzeuges abgeben. Die schließlich noch vorgesehene dritte LED 4c sorgt in Verbindung mit einem angedeuteten Lichtleitelement 11 dafür, dass das von ihr abgegebene und ebenfalls weiße Licht in einen Schwenkbereich des Türflügels 2 ausgesandt wird, d. h. in Richtung auf einen Untergrund. Dadurch kann ein Fahrzeugbenutzer unmittelbar erkennen, ob er beim Aussteigen beispielsweise in eine Pfütze tritt oder nicht.

Anhand der Darstellung in der Fig. 2 erkennt man, dass die Energie-Speichereinheit 3 nicht nur über eine lösbare elektrische Verbindung 8 mit der Leuchteinheit 4 und eine weitere lösbare elektrische Verbindung 9 mit dem Antrieb 7 für den Türflügel 2 ausgerüstet ist. Sondern nach dem Ausführungsbeispiel ist die weitere dritte lösbare elektrische Verbindung 12 realisiert, mit deren Hilfe die Energie-Speichereinheit 3 dafür sorgt, dass auch das Ausstellelement 5 im Notbetrieb mit der erforderlichen elektrischen Energie seitens der zentralen Energie-Speichereinheit 3 versorgt werden kann. Die Energie-Speichereinheit 3 wird dabei insgesamt seitens der Hauptenergiequelle im Innern der Kraftfahrzeugkarosserie mit der erforderlichen elektrischen Energie versorgt. Zu diesem Zweck ist das Kraftfahrzeug-Schloss bzw. das Kraftfahrzeug-Schlossgehäuse 6 über eine nicht ausdrücklich dargestellte elektrische Verbindung mit der Hauptenergiequelle gekoppelt. Gleiches gilt für das Ausstellelement 5 und auch den Antrieb bzw. Aktuator 7.

Kommt es nun zum Ausfall der Hauptenergiequelle, so sorgt zunächst die Energie-Speichereinheit 3 dafür, dass das Gesperre im Innern des Kraftfahrzeug-Schlossgehäuses 6 mit Hilfe des dortigen elektromotorischen Antriebes geöffnet wird. Anschließend stellt das Ausstellelement 5 mit Hilfe der durch die Energie-Speichereinheit 3 zur Verfügung gestellten Energie im Notbetrieb sicher, dass der Türflügel 2 zumindest soweit gegenüber der Kraftfahrzeugkarosserie ausgestellt wird, dass ein Benutzer oder Rettungspersonal über den sich bildenden Spalt zwischen dem Türflügel 2 und der Kraftfahrzeugkarosserie der Türflügel 2 vollständig manuell geöffnet werden kann.

Alternativ oder zusätzlich kann nach dem elektromotorischen Öffnen des Kraftfahrzeug-Schlosses der Türflügel 2 aber auch mit Hilfe des Antriebes 7 unter Rückgriff auf Energie seitens der Energie-Speichereinheit 3 zumindest soweit beaufschlagt werden, dass anschließend der Türflügel 2 vollständig manuell geöffnet wird. Grundsätzlich ist natürlich auch eine vollständige Öffnung des Türflügels 2 im Notbetrieb mit Hilfe des Antriebes 7 möglich und denkbar.

### Bezugszeichenliste

1 Achse
2 Klappenflügel
3 Energie-Speichereinheit
4 Leuchteinheit
5 Ausstellelement / Stellelement
6 Schlossgehäuse / Schließelement 7 Antrieb / Stellelement
8, 9, 12 elektrische Verbindung
10 Aufnahme
11 Lichtleitelement

## Patentansprüche

1. Kraftfahrzeug-Klappe, insbesondere Kraftfahrzeug-Tür, mit einer Leuchteinheit (4), und mit einer im Klappenflügel (2) angeordneten Energie-Speichereinheit (3) zur Energieversorgung zumindest der Leuchteinheit (4), wobei die Energie-Speichereinheit (3) über wenigstens eine lösbare elektrische Verbindung (8, 9, 12) mit der Leuchteinheit (4) gekoppelt ist,
**dadurch gekennzeichnet, dass**
zusätzlich zu der Leuchteinheit (4) ein elektrisch betätigbares Ausstellelement (5) für den Klappenflügel (2) vorgesehen ist, wobei
das Ausstellelement (5) ebenfalls lösbar mit der Energie-Speichereinheit (3) elektrisch verbunden ist, wobei ferner
die Leuchteinheit (4), die Energie-Speichereinheit (3) und das Ausstellelement (5) für den Türflügel (2) in einem Kraftfahrzeug-Schlossgehäuse (6) aufgenommen werden, wobei weiter
das Kraftfahrzeug-Schlossgehäuse (6) in seinem Innern neben der Leuchteinheit (4), der Energie-Speichereinheit (3) und dem Ausstellelement (5) zusätzlich übliche Schlosselemente wie ein Gesperre aus Drehfalle und Sperrklinke sowie eine Betätigungs-/Verriegelungshebelkette aufnimmt, und wobei
die Energie-Speichereinheit (3) eine zentrale Funktion zur Energieversorgung und insbesondere zur Notenergieversorgung übernimmt, nämlich in dem Fall, dass das dargestellte Kraftfahrzeug-Schlossgehäuse (6) nicht mehr elektrisch mit der Kraftfahrzeugkarosserie verbunden ist, weil bedingt durch einen Unfall die elektrische Verbindung unterbrochen oder beschädigt ist.

2. Kraftfahrzeug-Klappe nach Anspruch 1, **dadurch gekennzeichnet, dass** die Energie-Speichereinheit (3) und/oder die Leuchteinheit (4) jeweils einzeln oder zusammengenommen modular aufgebaut ist/sind.

3. Kraftfahrzeug-Klappe nach einem der Ansprüche 1 bis 2, **dadurch gekennzeichnet, dass** die Energie-Speichereinheit (3) und/oder die Leuchteinheit (4) zum nachträglichen Einbau in das Kraftfahrzeug-Schlossgehäuse (6) ausgebildet ist/sind.

4. Kraftfahrzeug-Klappe nach einem der Ansprüche 1 bis 3, **dadurch gekennzeichnet, dass** die Energie-Speichereinheit (3) und gegebenenfalls die Leuchteinheit (4) zusammengenommen ein Modul zum nachträglichen Einbau in das Kraftfahrzeug-Schlossgehäuse (6) definieren.

5. Kraftfahrzeug-Klappe nach einem der Ansprüche 1 bis 4, **dadurch gekennzeichnet, dass** die Leuchteinheit (4) wenigstens eine LED (4a, 4b, 4c) aufweist.

6. Kraftfahrzeug-Klappe nach Anspruch 5, **dadurch gekennzeichnet, dass** drei oder mehr LEDs (4a, 4b, 4c) vorgesehen sind.

7. Kraftfahrzeug-Klappe nach Anspruch 6, **dadurch gekennzeichnet, dass** die LEDs (4a, 4b, 4c) unterschiedlich farbig ausgebildet sind.

8. Kraftfahrzeug-Klappe nach einem der Ansprüche 1 bis 7, **dadurch gekennzeichnet, dass** die Energie-Speichereinheit (3) zumindest eine Batterie und/oder einen Kondensator aufweist.

## Claims

1. Motor vehicle flap, in particular motor vehicle door, with a lighting unit (4), and with an energy storage unit (3) arranged inside the folding flap (2) for supplying energy at least to the lighting unit (4), wherein the energy storage unit (3) is coupled to the lighting unit (4) via at least one detachable electrical connection (8, 9, 12),
**characterized in that**
in addition to the lighting unit (4), an electrically operable deployment element (5) is provided for the folding flap (2), wherein
the deployment element (5) is also connected electrically to the energy storage unit (3) in detachable manner, wherein further
the lighting unit (4), the energy storage unit (3) and the deployment element (5) for the door flap (2) are accommodated in a motor vehicle lock casing (6), wherein further
besides the lighting unit (4), the energy storage unit (3) and the deployment element (5), the inside of the motor vehicle lock casing (6) also contains usually lock elements such as a locking mechanism consisting of a rotary latch and pawl, and an actuation/locking lever chain, and wherein
the energy storage unit (3) has a central energy supply function and in particular emergency energy supply, particularly for the case that the motor vehicle lock casing (6) represented is no longer connected electrically to the vehicle body, because the electrical connection has been interrupted or damaged due to an accident.

2. Motor vehicle flap according to Claim 1, **characterized in that** the energy storage unit (3) and/or the lighting unit (4) is/are each constructed separately or together in modular manner.

3. Motor vehicle flap according to one of Claims 1 to 2, **characterized in that** the energy storage unit (3) and/or the lighting unit (4) is/are designed for retrofit installation in the motor vehicle lock casing (6).

4. Motor vehicle flap according to any one of Claims 1 to 3, **characterized in that** the energy storage unit (3) and optionally the lighting unit (4) in combination define a module for retrofit installation in the motor vehicle lock casing (6).

5. Motor vehicle flap according to any one of Claims 1 to 4, **characterized in that** the lighting unit (4) includes at least one LED (4a, 4b, 4c).

6. Motor vehicle flap according to Claim 5, **characterized in that** three or more LEDs (4a, 4b, 4c) are provided.

7. Motor vehicle flap according to Claim 6, **characterized in that** the LEDs (4a, 4b, 4c) are embodied in different colours.

8. Motor vehicle flap according to any one of Claims 1 to 7, **characterized in that** the energy storage unit (3) includes at least one battery and/or a capacitor.

## Revendications

1. Hayon de véhicule automobile, en particulier porte de véhicule automobile, avec une unité d'éclairage (4) et avec une unité d'accumulation d'énergie (3) disposée dans le battant de hayon (2) pour l'alimentation en énergie d'au moins l'unité d'éclairage (4), sachant que l'unité d'accumulation d'énergie (3) est couplée par au moins une liaison électrique amovible (8, 9, 12) à l'unité d'éclairage (4),
**caractérisé en ce qu'**
en plus de l'unité d'éclairage (4), un élément déployable (5) pouvant être actionné électriquement est prévu pour le battant de hayon (2), sachant que
l'élément déployable (5) est relié électriquement également de façon amovible à l'unité d'accumulation d'énergie (3), sachant en plus que
l'unité d'éclairage (4), l'unité d'accumulation d'énergie (3) et l'élément déployable (5) pour le battant de porte (2) sont logés dans un boîtier de serrure de véhicule automobile (6), sachant en outre que
le boîtier de serrure de véhicule automobile (6) loge dans son intérieur en plus de l'unité d'éclairage (4), de l'unité d'accumulation d'énergie (3) et de l'élément déployable (5) en plus des éléments de serrure usuels comme un mécanisme d'encliquetage composé d'un pêne pivotant et d'un cliquet d'arrêt ainsi qu'une chaîne à levier d'actionnement/de verrouillage, et sachant que
l'unité d'accumulation d'énergie (3) prend en charge une fonction centrale pour l'alimentation d'énergie et en particulier pour l'alimentation en énergie de secours, notamment au cas où le boîtier de serrure de véhicule automobile (6) représenté n'est plus relié électriquement à la carrosserie de véhicule automobile, en raison du fait que la liaison électrique est interrompue ou endommagée par un accident.

2. Hayon de véhicule automobile selon la revendication 1, **caractérisé en ce que** l'unité d'accumulation d'énergie (3) et/ou l'unité d'éclairage (4) est/sont respectivement conçues individuellement ou ensemble de façon modulaire.

3. Hayon de véhicule automobile selon l'une quelconque des revendications 1 à 2, **caractérisé en ce que** l'unité d'accumulation d'énergie (3) et/ou l'unité d'éclairage (4) est/sont constituée(s) pour l'incorporation ultérieure dans le boîtier de serrure de véhicule automobile (6).

4. Hayon de véhicule automobile selon l'une quelconque des revendications 1 à 3, **caractérisé en ce que** l'unité d'accumulation d'énergie (3) et le cas échéant l'unité d'éclairage (4) définissent ensemble un module pour l'incorporation ultérieure dans le boîtier de serrure de véhicule automobile (6).

5. Hayon de véhicule automobile selon l'une quelconque des revendications 1 à 4, **caractérisé en ce que** l'unité d'éclairage (4) comporte au moins une diode électroluminescente (DEL) (4a, 4b, 4c).

6. Hayon de véhicule automobile selon la revendication 5, **caractérisé en ce que** trois diodes électroluminescentes (LED) (4a, 4b, 4c) ou plus sont prévues.

7. Hayon de véhicule automobile selon la revendication 6, **caractérisé en ce que** les diodes électroluminescentes (LED) (4a, 4b, 4c) sont constituées de couleurs différentes.

8. Hayon de véhicule automobile selon l'une quelconque des revendications 1 à 7, **caractérisé en ce que** l'unité d'accumulation d'énergie (3) comporte au moins une batterie et/ou un condensateur.
